# EUROPÄISCHE PATENTSCHRIFT

(11) **EP 1 485 001 B1**
(45) Veröffentlichungstag und Bekanntmachung des Hinweises auf die Patenterteilung: **24.05.2006**
(21) Anmeldenummer: 03743848.8
(22) Anmeldetag: 06.03.2003
(51) Int. Cl.: A47J 43/07

(54) **KÜCHENMASCHINE**
KITCHEN APPLIANCE
MATERIEL DE CUISINE

(30) Priorität: 09.03.2002 DE 10210442
(43) Veröffentlichungstag der Anmeldung: 15.12.2004
(73) Patentinhaber: Vorwerk & Co. Interholding GmbH, 42275 Wuppertal (DE)
(72) Erfinder: KECK, Ulrich, 58332 Schwelm (DE); WEBER, Klaus, Martin, 42107 Wuppertal (DE); CALDEWEY, Uwe, 44229 Dortmund (DE); KEMKER, Uwe, D-42105 Wuppertal (DE); HILGERS, Stefan, 45357 Essen (DE)
(74) Vertreter: Müller, Enno
(86) Internationale Anmeldenummer: PCT/EP2003/002288
(87) Internationale Veröffentlichungsnummer: WO 2003/075727

(56) Entgegenhaltungen:
- EP-A- 1 153 563
- FR-A- 2 769 197
- US-A- 3 101 107
- US-B1- 6 340 124

## Beschreibung

Die Erfindung betrifft eine Küchenmaschine nach den Merkmalen des Oberbegriffes des Anspruches 1.

Küchenmaschinen der in Rede stehenden Art sind bekannt. Diese weisen in der Regel ein von der Küchenmaschine abnehmbares Rührgefäß auf, in welchem ein Rührwerk angeordnet ist. Letzteres wird über einen küchenmaschinenseitigen Elektromotor angetrieben, wozu an der Schnittstelle zwischen Rührgefäß und küchenmaschinenseitiger Aufnahme eine Kupplung vorgesehen ist. Zur Regelung des, das Rührwerk antreibenden Elektromotors ist in der Regel ein Drehzahlsteller vorgesehen, welcher gegebenenfalls zusammen mit weiteren Stellern sowie Anzeigeelementen in einem vom Rührgefäß-Aufnahmebereich gesonderten Displaybereich angeordnet ist. Des Weiteren sind Küchenmaschinen bekannt, bei welchen das Rührgefäß beheizbar ist. So bildet weiter bspw. der Gefäßboden ein elektrisch ansteuerbares Heizelement aus.

Bei einer bekannten Küchenmaschine der eingangs genannten Art, wenn sie auch nicht aufheizbar ist, vgl. EP 1 153 563 A1, ist das Rührgefäß im Bereich des oberen Randes bzw. des Deckels über einen Teil des Umfanges von zwei sich horizontal erstreckenden Armen umfasst. Diese Arme wurzeln rückseitig in einem gemeinsamen Sockel.

Das bekannte Rührgefäß kann aus der Küchenmaschine ohne weiteres nach vorne entnommen werden, auch in im Wesentlichen horizontaler Richtung. Zudem ist das Rührgefäß im Bodenbereich weitgehend freiliegend.

Ausgehend von dem genannten Stand der Technik beschäftigt sich die Erfindung mit der Aufgabe, eine Küchenmaschine der in Rede stehenden Art insbesondere handhabungstechnisch zu verbessern.

Diese Aufgabe ist beim Gegenstand des Anspruches 1 gelöst, wobei darauf abgestellt ist, dass die Verriegelungselemente ausgehend von zwei gegenüberliegend angeordneten turmartigen Backen mit dem oberen Rand zusammenwirken, welche Backen das Rührgefäß jeweils teilweise umfangsmäßig, jedoch von unten ausgehend bis an den oberen Rand des Rührgefäßes umgreifen. Zufolge dieser Ausgestaltung ist eine Küchenmaschine geschaffen, welche zwei, zwischen sich das Rührgefäß aufnehmende, turmartige Backen aufweist, welche im oberen Bereich bevorzugt aufeinander zu gerichtete Verriegelungselemente aufweisen, zur Zusammenwirkung mit dem oberen Rand des Rührgefäßes oder, wie bevorzugt, mit dem Rand eines auf dem Rührgefäß aufsitzenden und weiter bevorzugt mit diesem verriegelten Deckel. Wie erwähnt, umgreifen die Backen das Rührgefäß jeweils teilweise umfangsmäßig, so bspw. im unteren Bereich der Backen jeweils um ein Achtel bis ein Sechstel des Rührgefäßumfangs. Darüber hinaus sind die turmartigen Backen so ausgebildet, dass diese im oberen Randbereich des Rührgefäßes dieses jeweils lediglich im Bereich eines Zehntels bis eines Zwanzigstels des Rührgefäßumfanges umgreifen. Die backenseitigen Verriegelungselemente wirken bevorzugt mit Verriegelungsgegenelementen des Rührgefäßdeckels zusammen. Diese Gegenelemente können in Form von radial abragenden Schulterabschnitten gebildet seine, welche in nutartige, die Verriegelungselemente bildende Aufnahmen der Backen eingedreht werden, wodurch eine gleichmäßige Krafteinleitung in die Backen erreicht ist. Zugleich kann sich das Rührgefäß im Bereich des Gefäßbodens auf dem Aufnahmeboden zwischen den Backen abstützen, womit durch die erfindungsgemäße Ausgestaltung eine Dreipunkthalterung des Rührgefäßes erreicht ist. Dies führt zu einer erhöhten Stabilität und zu einer kompakten Bauweise. Das eingesetzte Rührgefäß ist durch die seitliche, teilweise Abdeckung mittels der maschinenseitigen Backen sicher gehaltert. Des Weiteren ist insbesondere bei einem beheizbaren Rührgefäß durch das teilweise Umgreifen desselben eine verbesserte Wärmedämmung gegeben. Neben dieser thermischen Isolation ist auch eine akustische Isolation erreicht, was zu einer Geräuschminimierung führt. In einer vorteilhaften Weiterbildung des Erfindungsgegenstandes ist vorgesehen, dass die Küchenmaschine zwischen den Backen zwei gegenüberliegende, eine V-förmig begrenzte Freifläche ausbildende Ausschnitte aufweist. Bevorzugt ist der Aufnahmebereich für das Rührgefäß so ausgebildet, dass die zwischen den Backen ausgeformten Ausschnitte halsausschnittartig ausgebildet sind, wobei die Verriegelungselemente im Schulterbereich der Backen ausgeformt sind und ein Ausschnitt einem Brustbereich und der andere Ausschnitt einem Rückenbereich der. Backen zugeordnet ist. Die Ausschnitte erweitern sich V-förmig nach oben in Richtung auf die Backenschultern, wobei die nach unten weisende V-Spitze stark verrundet ist. Zur besseren Handhabung des Rührgefäßes weist dieses bevorzugt einen Haltegriff auf, wobei weiter der Haltegriff sich freistehend zwischen den Backen erstreckt. Diesbezüglich ist eine senkrechte Ausrichtung des Haltegriffes vorgesehen, wobei bei verriegeltem Rührgefäß der Haltegriff sich mittig eines, bevorzugt dem Brustbereich der Backen zugeordneten Ausschnittes erstreckt und somit der V-Spitze zugeordnet ausgerichtet ist. Wie auch schon aus dem Stand der Technik bekannt, ist auch die erfindungsgemäße Küchenmaschine mit einem, bspw. einen Drehzahlsteller und gegebenenfalls einen Temperaturwähler für eine Heizung aufnehmenden Bedienfeld versehen. Diesbezüglich ergeben sich handhabungstechnische Vorteile, wenn, wie vorgesehen, am Fuß der Bakken ein beide Backenfüße verbindendes Bedienfeld angeordnet ist. Das Bedienfeld ist demnach unmittelbar unterhalb des eingesetzten Rührgefäßes angeordnet, womit eine vorteilhafte Handhabung der Küchenmaschine sowohl für Links- als auch für Rechtshänder gewährleistet ist. In vorteilhafter Weise ist das Bedienfeld dem Brustbereich der Rührgefäß-Aufnahme zugeordnet, wobei weiter bevorzugt das Bedienfeld ausgehend von den Backenfüßen nach außen abfallend ausgebildet ist. Bevorzugt schließt hierbei das Bedienfeld zur Horizontalen einen wesentlich kleineren Winkel ein als der zugeordnete Brustabschnitt der Backen, so dass eine handhabungsfreundliche Neigung des Bedienfeldes vorliegt. Um dieses Bedienfeld vor eventuell über den Gefäßrand tretendes Rühr- bzw. Kochgut zu schützen, ist in einer vorteilhaften Weiterbildung des Erfindungsgegenstandes vorgesehen, dass an den Backenfüßen eine, das Bedienfeld abschirmende und beide Backen verbindende Ablaufrinne ausgebildet ist. Letztere ist so angeordnet und geformt, dass an dem Rührgefäß ablaufendes oder abtropfendes Gut über die Ablaufrinne seitlich abgeführt wird ohne dass dieses über das Bedienfeld laufen kann. Der Querschnitt der Ablaufrinne ist hierbei in vorteilhafter Weise so gewählt, dass diese zur einfachen Reinigung querschnittsmäßig ausreichend groß bemessen ist. Auch wird vorgeschlagen, dass die Backen gegebenenfalls einschließlich der Ablaufrinne als integrales Kunststoffteil ausgebildet ist, so weiter bevorzugt als Kunststoff-Spritzteil. Als besonders vorteilhaft erweist sich eine Ausgestaltung, bei welcher in dem Kunststoffteil ein, Durchbrüche für einen Rührwerksantrieb und gegebenenfalls für Elektrokontaktleitungen belassener Boden zwischen den Backen ausgebildet ist. Auf diesem Boden des integralen Kunststoffteiles stützt sich das Rührgefäß bodenseitig ab. Die mit einer Kupplung versehene, zum Antrieb des Rührwerks in dem Rührgefäß in der Küchenmaschine vorgesehene Antriebswelle durchsetzt den Kunststoffteil-Boden im Bereich eines entsprechend angeordneten Durchbruches. Ein oder mehrere weitere Durchbrüche im Bereich des Bodens können bspw. zum Durchtritt von Elektrokontaktleitungen vorgesehen sein, so weiter bspw. zur Kontaktierung einer in dem Rührgefäß vorgesehenen Heizung. Eine erhöhte Stabilität der Rührgefäß-Aufnahme ist dadurch erreicht, dass die gegenüberliegenden V-förmigen Ausschnitte von unterschiedlichen Höhenniveaus ausgehen. So ist mit Bezug zu dem Kunststoffteil-Boden die V-Spitze des hinteren, dem Rückenbereich der Rührgefäß-Aufnahme zugeordneten Ausschnittes höher angeordnet als die V-Spitze des brustseitigen Ausschnittes, so dass der hintere V-Ausschnitt von einem höheren Niveau ausgeht als der vordere V-Ausschnitt, wobei die V-Spitze des vorderen V-Ausschnittes bevorzugt bis an die zugeordnete Ablaufrinne ragt. Durch die erfindungsgemäße Ausgestaltung ist eine hängende Rührgefäßpositionierung ermöglicht; somit eine Entkopplung erreichbar. Durch weitere Verschlusselemente am Rührgefäß zur Festlegung des Deckels ist ein Verschlussmechanismus mit vier Haltepunkten zwischen Deckel, Rührgefäß und Gerät ermöglicht, womit Materialverformungen entgegengewirkt wird. Die eigentlichen Deckelverschlusswege sind räumlich im Bereich des Rührgefäßrandes angeordnet und erlauben so die Toleranzkette des Deckelverschlusses zu minimieren, was auch zu einer verbesserten Dichtigkeit zwischen Deckel und Rühr-gefäß führt.

Nachstehend ist die Erfindung anhand der beigefügten Zeichnung, welche lediglich ein Ausführungsbeispiel darstellt, näher erläutert. Es zeigt:
- Fig. 1: eine perspektivische Darstellung der erfindungsgemäßen Küchenmaschine ohne Rührgefäß;
- Fig. 2: die Vorderansicht hierzu;
- Fig. 3: eine perspektivische Rückansicht der Küchenmaschine mit eingesetztem Rührgefäß;
- Fig. 4: eine der Fig.1 entsprechende perspektivische Darstellung, jedoch bei eingesetztem Rührgefäß sowie auf diesem aufsitzenden Deckel;
- Fig. 5: eine Seitenansicht hierzu;

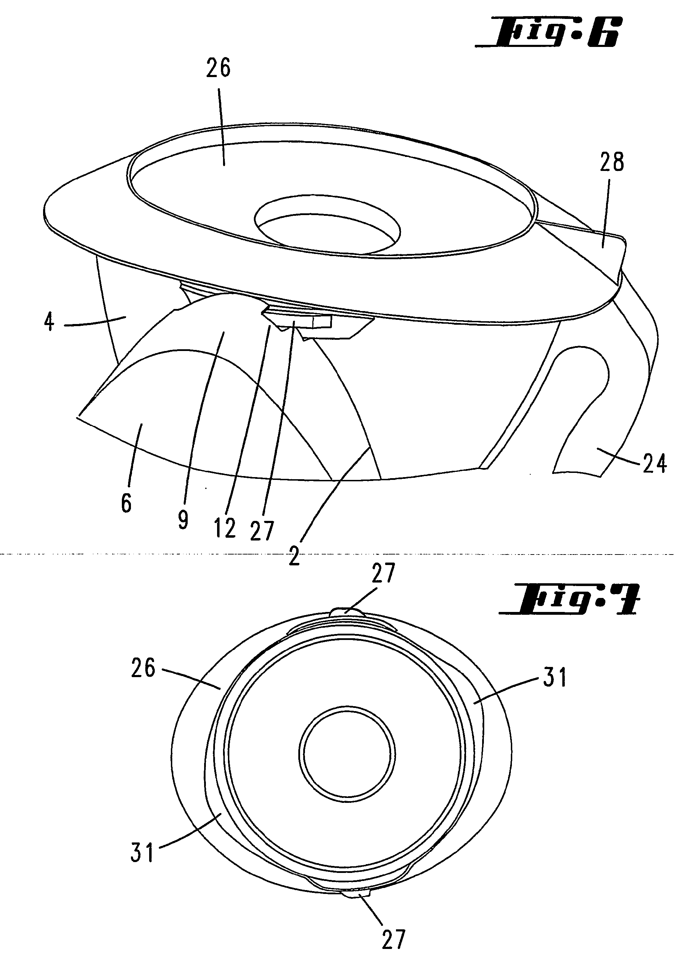

- Fig. 6: eine perspektivische Detaildarstellung des deckelseitigen Verriegelungsbereiches;
- Fig. 7: eine Einzeldarstellung des Rührgefäßdeckels, die Unteransicht betreffend.

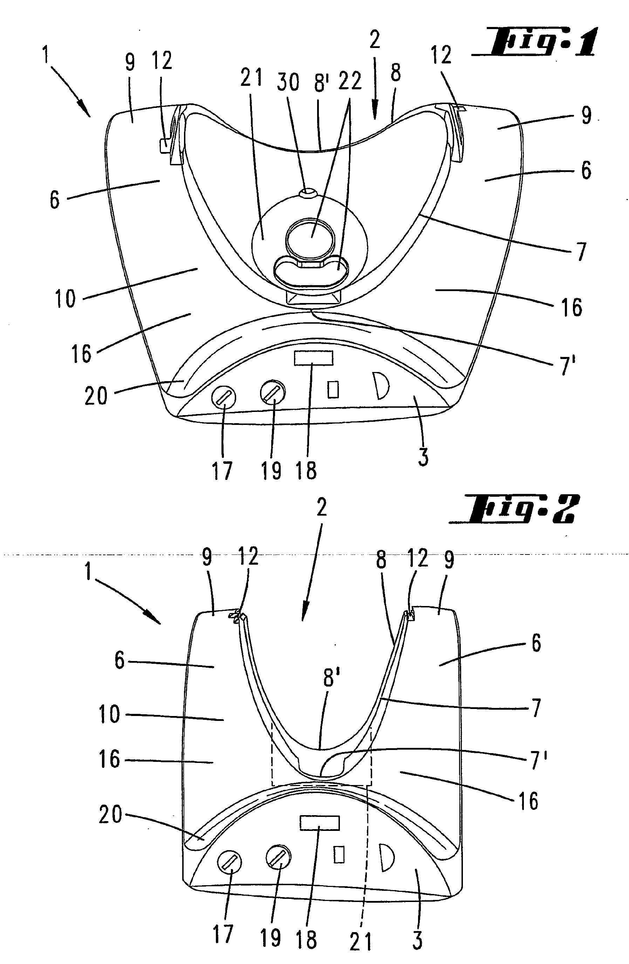

Dargestellt und beschrieben ist zunächst mit Bezug zu Fig.1 eine Küchenmaschine 1 mit einer Rührgefäß-Aufnahme 2 und einem Bedienfeld 3.

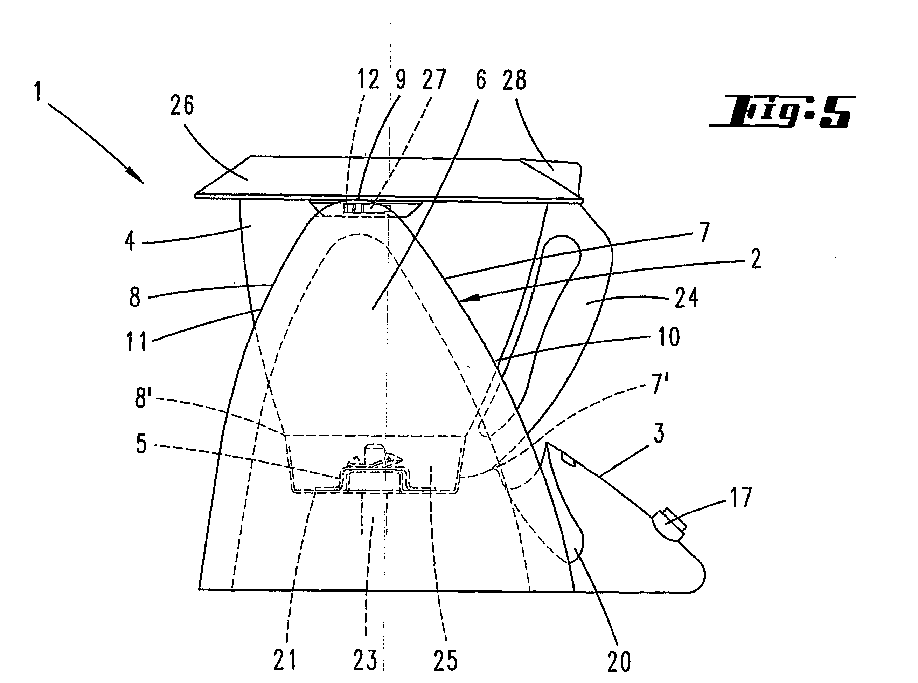

Der Küchenmaschine 1 ist, wie bspw. in Fig. 4 zu erkennen, ein Rührgefäß 4 zuordbar, indem dieses in die Rührgefäß-Aufnahme 2 eingesetzt wird. In dem Rührgefäß 4 ist dem Rührgefäßboden zugeordnet ein Rührwerk 5 vorgesehen, welches über einen in der Küchenmaschine 1 unterhalb der Aufnahme 2 angeordneten, nicht näher dargestellten Elektroantrieb betrieben wird.

Die Rührgefäß-Aufnahme 2 ist im Wesentlichen gebildet aus zwei gegenüberliegend angeordneten, turmartigen Backen 6, zwischen welchen Backen 6 zwei gegenüberliegende, eine V-förmig begrenzte Freifläche ausbildende Ausschnitte 7 und 8 ausgeformt sind. Die Ausschnitte 7 und 8 sind hierbei so gerichtet, dass diese von einer nach unten weisenden V-Spitze 7', 8' nach oben in Richtung auf Schultern 9 ausbildenden oberen Enden der Backen 6 sich weitend auslaufen, wobei die Spitzen 7' und 8' der Ausschnitte 7 und 8 stark verrundet sind.

Auch die Backen 6 sind seitlich, d. h. quer zu der Ausschnittsebene betrachtet, V-förmig ausgebildet, wobei jedoch hier die V-Spitze nach oben weisend die bereits erwähnten Schultern 9 ausformen.

Durch die beschriebene geometrische Ausgestaltung der Rührgefäß-Aufnahme 2 bildet diese einen vorderen Brustbereich 10 und einen rückwärtigen Rückenbereich 11 aus, wobei die V-förmigen Ausschnitte 7, 8 halsausschnittartig den Brustbereich 10 bzw. den Rückenbereich 11 durchsetzen.

Im Bereich der Schultern 9, d. h. in den oberen Randbereichen der Ausschnitte 7 und 8 sind Verriegelungselemente 12 in Form von horizontalen, in Richtung auf die Ausschnitte 7, 8 hin geöffnete Nuten vorgesehen.

Die Füße 13 der, dem Rückenbereich 11 zugeordneten Backen 6 sind über ein Rückwandelement 14 miteinander verbunden, welch letzteres sich in Verlängerung der Backen 6, d. h. mit deren Neigung bzw. Krümmung weiter fortlaufend bis zur bodenseitigen Stützfläche erstreckt. In diesem Rückwandelement 14 ist ein Durchbruch für ein Elektrokabel 15 zur Stromversorgung der in der Küchenmaschine 1 angeordneten Elektroelemente vorgesehen.

An den Füßen 16 der, dem Brustbereich 10 zugeordneten Backen 6 ist das beide Backenfüße 16 verbindende Bedienfeld 3 angeordnet. Dieses fällt, ausgehend von den Backenfüßen 16 nach außen ab, wobei das Bedienfeld 3 zur Horizontalen einen wesentlich kleineren Winkel einschließt als die zugeordnete Brustbereich-Backe 6 (vergl. Fig. 5). Zufolge dieser Ausgestaltung ist das Bedienfeld 3 in einer anwenderfreundlichen Neigung positioniert. In diesem Bedienfeld 3 ist unter anderem ein Drehzahlsteller 17 zur Regulierung des, das Rührwerk 5 des Rührgefäßes 4 antreibenden Elektromotors positioniert. Darüber hinaus können auch Anzeigeelemente 18 sowie bei einer möglichen Anordnung einer Heizung ein Temperaturwähler 19 in dem Bedienfeld 3 angeordnet sein.

Im Übergangsbereich von Backen 6 auf das Bedienfeld 3 ist eine, die beiden Backen 6 verbindende, das Bedienfeld 3 abschirmende Ablaufrinne 20 vorgesehen, welche einen kreisabschnittförmigen Querschnitt aufweist (vergl. Fig. 5). Die Öffnungsweite der Ablaufrinne 20 ist hierbei so gewählt, dass ein müheloses Reinigen derselben gewährleistet ist. Der Verlauf der Ablaufrinne 20 ist der, den Backen 6 zugewandten kreisabschnittförmigen Kontur des Bedienfeldes 3 angepasst, wobei der Scheitelpunkt der Ablaufrinne 20 unmittelbar unterhalb der V-Spitze 7' des zugeordneten V-Ausschnittes 7 ausgerichtet ist.

Die im Wesentlichen aus den Backen 6 bestehende Rührgefäß-Aufnahme 2 einschließlich der Ablaufrinne 20 sind als integrales Kunststoffteil, insbesondere Kunststoff-Spritzteil ausgebildet, wobei in diesem Kunststoffteil zwischen den Backen 6 ein Boden 21 ausgeformt ist. Dieser weist einen im Wesentlichen kreisrunden Grundriss auf, wobei Durchbrüche 22 vorgesehen sind. Ein zentraler Durchbruch 22 dient hierbei dem Durchtritt des Rührwerkantriebes 23. Ein oder mehrere dezentrale Durchbrüche 22 dienen bspw. der Aufnahme von Elektrokontaktleitungen, so z. B. zur Kontaktierung einer in dem Rührgefäß 4 angeordneten Heizung. Unmittelbar oberhalb der Bodenebene ist eine, das Rückwandelement 14 durchsetzende Durchbrechung vorgesehen, zur Bildung eines Ablaufs 30.

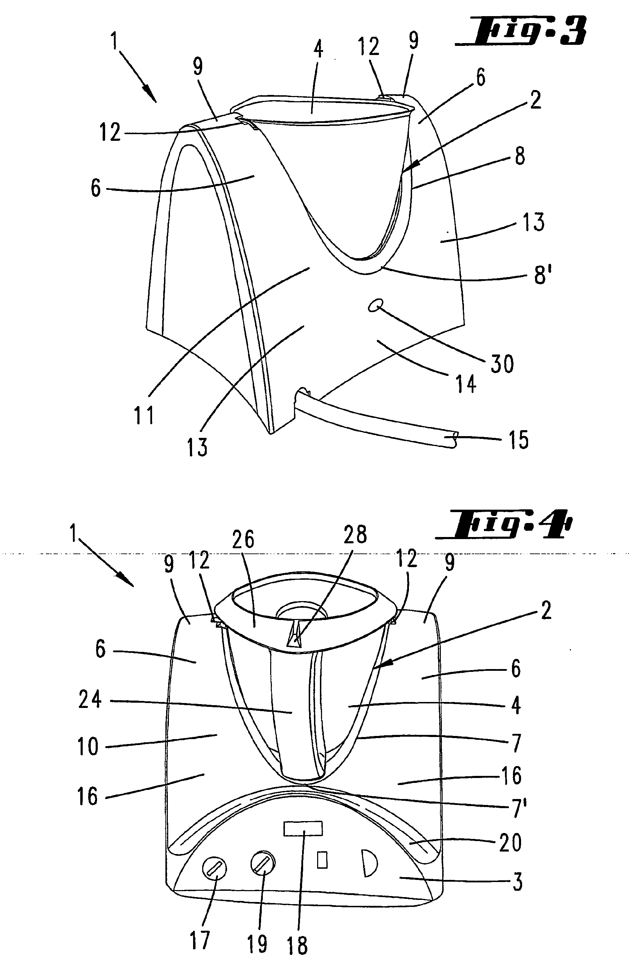

Die gegenüberliegenden V-förmigen Ausschnitte 7 und 8 der Rührgefäß-Aufnahme 2 gehen von unterschiedlichen Höhenniveaus aus. So ist vorgesehen, dass der hintere V-Ausschnitt 8 von einem höheren Niveau ausgeht als der vordere V-Ausschnitt 7. Demnach ist die V-Spitze 8' des, dem Rückenbereich 11 zugeordneten Ausschnittes 8 zum integralen Boden 21 größer beabstandet als die V-Spitze 7' des brustseitigen Ausschnittes 7 (vergl. Fig. 2).

Das in die Rührgefäß-Aufnahme 2 einzusetzende Rührgefäß 4 besitzt einen senkrecht ausgerichteten Haltegriff 24. Der Sockelbereich 25 des Rührgefäßes 4 ist topfartig mit kreisrundem Querschnitt ausgebildet und trägt zentral im Innern das Rührwerk 5.

Das Rührgefäß 4 wird der Küchenmaschine 1 derart zugeordnet, dass der Haltegriff 24 sich freistehend zwischen den Backen 6, dem Bedienfeld 3 zugewandt, erstreckt, wobei der Sockelbereich 25 sich auf dem integralen Boden 21 abstützt, dies unter Kupplung von Rührwerkantrieb 23 und Rührwerk 5.

Auf das Rührgefäß 4 wird ein Deckel 26 aufgesetzt, mittels welchem durch Verdrehen desselben bevorzugt im Uhrzeigersinn eine Verriegelung durchgeführt wird. Hierzu weist der Deckel 26 zunächst außenrandseitig gegenüberliegend angeordnete, radial abragende Verriegelungsnasen 27, welche bei einer Verdrehung des Deckels 26 in die nutartigen Verriegelungselemente 12 der Rührgefäß-Aufnahme 2 eintauchen, auf. Zur verbesserten Drehhandhabung des Deckels 26 besitzt dieser eine bevorzugt daumenbetätigbare, stegartige Handhabe 28. Darüber hinaus werden bei einer Verdrehung des Deckels 26 in die Verriegelungsstellung zugleich unterseitig angeordnete Kupplungsabschnitte 31 in eine mit dem Rührgefäß 4 verriegelte Stellung verbracht. Es ist so eine Vierpunkt-Verschlusslösung geschaffen, wobei die eigentlichen Deckelverschlusswege räumlich im Bereich des Rührgefäßrandes positioniert sind. Darüber hinaus ist durch diesen Verschlussmechanismus einer möglichen Materialverformung entgegengewirkt.

Neben der hierdurch gebildeten Festlegung des Rührgefäßes 4 in der Küchenmaschine 1 kann mittels der nutartigen Verriegelungselemente 12 auch eine Abfrage erfolgen, ob ein Deckel 26 aufgesetzt ist oder nicht. So kann bspw. die Inbetriebnahme des Rührwerkes 5 bei fehlendem Deckel 26 unterbunden werden. Diesbezüglich wird auf die nicht vorveröffentlichte deutsche Patentanmeldung mit dem Aktenzeichen 10131483.3 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Es ergibt sich durch die erfindungsgemäße Ausgestaltung auch eine erhöhte Stabilität insbesondere im Bereich der Rührgefäß-Aufriahme 2 sowie im Zusammenhang mit einer gegebenenfalls vorhandenen Heizung auch eine erhöhte Wärmedämmung, da die gegenüberliegenden Backen 6 das Rührgefäß 4 jeweils teilweise umfangsmäßig und von unten ausgehend bis an den oberen Rand des Rührgefäßes 4 umgreifen. Des Weiteren ist durch die erfindungsgemäße Ausgestaltung auch eine Geräuschminimierung erreicht.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Küchenmaschine (1) mit einem Rührgefäß (4) und einem Elektroantrieb für ein Rührwerk (5) in dem Rührgefäß (4), wobei das Rührgefäß (4) in der Küchenmaschine (1) unter Verriegelung gehaltert ist, wobei weiter Verriegelungselemente (12) mit einem oberen Rand des Rührgefäßes (4) oder einem hierauf aufsitzenden Deckel (26) zusammenwirken, wobei die Backen das Rührgefäß teilweise umfangsmäßig umgreifen, **dadurch gekennzeichnet, dass** die Verriegelungselemente (12) ausgehend von zwei gegenüberliegend angeordneten turmartigen Backen mit dem oberen Rand bzw. dem Deckel zusammenwirken, und dass die Backen das Rührgefäß von unten ausgehend bis an den oberen Rand des Rührgefäßes umgreifen.

2. Küchenmaschine nach Anspruch 1, **dadurch gekennzeichnet, dass** die Küchenmaschine (1) zwischen den Backen (6) zwei gegenüberliegende, eine V-förmig begrenzte Freifläche ausbildende Ausschnitte (7, 8) aufweist.

3. Küchenmaschine nach einem der vorhergehenden Ansprüche, **dadurch** gekerinzeichnet, däss däs Rührgefäß (4) einen Hältegriff (24) äufweist.

4. Küchenmaschine nach Anspruch 3, **dadurch gekennzeichnet, dass** der Haltegriff (24) sich freistehend zwischen den Backen (6) erstreckt.

5. Küchenmaschine nach einem der Ansprüche 1 bis 4, **dadurch gekennzeichnet, dass** am Fuß (16) der Backen (6) ein beide Backenfüße (16) verbindendes Bedienfeld (3) angeordnet ist.

6. Küchenmaschine nach Anspruch 5, **dadurch gekennzeichnet, dass** das Bedienfeld (3) ausgehend von den Backenfüßen (16) nach außen abfallend ausgebildet ist.

7. Küchenmaschine nach einem der Ansprüche 1 bis 6, **dadurch gekennzeichnet, dass** an den Backenfüßen (16) eine, das Bedienfeld (3) abschirmende und beide Backen (6) verbindende Ablaufrinne (20) ausgebildet ist.

8. Küchenmaschine nach einem der Ansprüche 1 bis 7, **dadurch gekennzeichnet, dass** die Backen (6) gegebenenfalls einschließlich der Ablaufrinne (20) als integrales Kunststoffteil ausgebildet ist.

9. Küchenmaschine nach Anspruch 8, **dadurch gekennzeichnet, dass** in dem Kunststoffteil ein, Durchbrüche (22) für einen Rührwerksantrieb (23) und gegebenenfalls Elektrokontaktleitungen belassener Boden (21) zwischen den Backen (6) ausgebildet ist.

10. Küchenmaschine nach einem der Ansprüche 1 bis 9 **dadurch gekennzeichnet, dass** die gegenüberliegenden V-förmigen Ausschnitte (7, 8) von unterschiedlichen Höhenniveaus ausgehen.

11. Küchenmaschine nach Anspruch 10, **dadurch gekennzeichnet, dass** der hintere V-Ausschnitt (8) von einem höheren Niveau ausgeht als der vordere V-Ausschnitt (7).

## Claims

1. Kitchen appliance (1) having a stirring vessel (4) and an electric drive for a stirring mechanism (5) in the stirring vessel (4), wherein the stirring vessel (4) is mounted in the kitchen appliance (1) with locking, wherein also locking elements (12) cooperate with an upper rim of the stirring vessel (4) or a lid (26) mounted thereon, wherein the jaws surround the stirring vessel partly peripherally, **characterised in that** the locking elements (12) cooperate with the upper rim or the lid starting from two tower-like jaws arranged opposite one another, and **in that** the jaws surround the stirring vessel starting from the bottom as far as the upper rim of the stirring vessel.

2. Kitchen appliance according to claim 1, **characterised in that** the kitchen appliance (1) has two opposing cutouts (7, 8) forming a V-like defined free surface between the jaws (6).

3. Kitchen appliance according to one of the preceding claims, **characterised in that** the stirring vessel (4) has a handle (24).

4. Kitchen appliance according to claim 3, **characterised in that** the handle (24) extends in self-supporting manner between the jaws (6).

5. Kitchen appliance according to one of claims 1 to 4, **characterised in that** a control panel (3) connecting both jaw bases (16) is arranged on the base (16) of the jaws (6).

6. Kitchen appliance according to claim 5, **characterised in that** the control panel (3) is designed to fall away to the outside starting from the jaw bases (16).

7. Kitchen appliance according to one of claims 1 to 6, **characterised in that** a discharge channel (20) protecting the control panel (3) and connecting both jaws (6) is formed on the jaw bases (16).

8. Kitchen appliance according to one of claims 1 to 7, **characterised in that** the jaws (6), optionally including the discharge channel (20), is designed as an integral plastic part.

9. Kitchen appliance according to claim 8, **characterised in that** a base (21) between the jaws (6) leaving openings (22) for a stirring mechanism drive (23) and optionally electric contact leads, is formed in the plastic part.

10. Kitchen appliance according to one of claims 1 to 9, **characterised in that** the opposing V-shaped cutouts (7, 8) start from different height levels.

11. Kitchen appliance according to claim 10, **characterised in that** the rear V cutout (8) starts from a higher level than the front V cutout (7).

## Revendications

1. Robot ménager (1) avec un bac à agitation (4) et un mécanisme d'entraînement électrique pour un agitateur (5) dans le bac à agitation (4), le bac à agitation (4) étant maintenu dans le robot ménager (1) par un dispositif de verrouillage, où plusieurs organes de verrouillage (12) agissent ensemble avec un bord supérieur du bac à agitation (4) ou avec un couvercle (26) qui repose sur celui-ci, les mâchoires entourant partiellement le bac à agitation d'une manière circonférentielle, **caractérisé en ce que**, les organes de verrouillage (12) à partir de deux mâchoires en forme de colonne aménagées l'une en face de l'autre agissent ensemble avec le bord supérieur ou avec le couvercle, et **en ce que** les mâchoires entourent le bac à agitation à partir d'en bas jusqu'au bord supérieur du bac à agitation.

2. Robot ménager selon la revendication 1, **caractérisé en ce que**, le robot ménager (1) présente entre les mâchoires (6) deux découpes (7, 8) se faisant face qui forment une surface libre limitée en forme de V.

3. Robot ménager selon l'une des revendications citées plus haut, **caractérisé en ce que** le bac à agitation (4) présente une poignée (24).

4. Robot ménager selon la revendication 3, **caractérisé en ce que** la poignée (24) s'étend d'une manière isolée entre les mâchoires (6).

5. Robot ménager selon l'une des revendications 1 à 4, **caractérisé en ce qu'**un tableau de commande (3) est aménagé à la base (16) des mâchoires (6) et relie les deux bases (16) des mâchoires.

6. Robot ménager selon la revendication 5, **caractérisé en ce que** le tableau de commande (3) s'incline vers l'extérieur à partir des bases (16) des mâchoires.

7. Robot ménager selon l'une des revendications 1 à 6, **caractérisé en ce qu'**une gouttière (20) aménagée sur les bases (16) des mâchoires relie les deux mâchoires (6) et protège le tableau de commande (3).

8. Robot ménager selon l'une des revendications 1 à 7, **caractérisé en ce que** les mâchoires (6) forment le cas échéant une seule pièce en plastique y compris avec la gouttière (20).

9. Robot ménager selon la revendication 8, **caractérisé en ce que**, dans la partie en plastique entre les mâchoires, des orifices (22) sont aménagés sur un fond (21) pour un mécanisme d'entraînement de l'agitateur (23) et le cas échéant pour des fils de contact électrique.

10. Robot ménager selon l'une des revendications 1 à 9, **caractérisé en ce que** les découpes (7, 8) en forme de V se faisant face sont aménagées à différents niveaux de hauteur.

11. Robot ménager selon la revendication 10, **caractérisé en ce que** la découpe (8) arrière en forme de V est aménagée à un niveau plus élevé que la découpe avant (7) en forme de V.
